# EUROPEAN PATENT APPLICATION

(11) **EP 0 925 974 A2**
(43) Date of publication of application: **30.06.1999**
(21) Application number: 98123244.0
(22) Date of filing: 07.12.1998
(51) Int. Cl.: B60J 5/06

(54) **System to limit the stroke of a side sliding door of a work vehicle**

(30) Priority: 18.12.1997 IT TO971109
(71) Applicant: FIAT AUTO S.p.A., 10135 Torino (IT)
(72) Inventor: Besenzoni, Giacomo, 10137 Torino (IT); Novarino, Walter, 10040 Rivalta (TO) (IT); Castelli, Pierguido, 11020 Pecetto (TO) (IT)
(74) Representative: Di Francesco, Gianni

(57) **Abstract**

System to stop the side sliding door (6) of a work vehicle provided with a back swing-door (8) collapsible on the body side, said side door being slidingly supported by means of small arms (14) provided with guiding rollers (16;17), between a position of maximum opening and a closing position; the stop system including a combination means to absorb energy (24',28), means to stop (24,38,46,49) the opening stroke of the door at an intermediate position and means to control (42,54,58,66) the means (24',28) to absorb energy and the means (24,38,46,49) to stop the stroke.

## Description

The present invention relates to a system intended to limit the stroke of the side sliding door of a work vehicle (van) under certain operation conditions.

Work vehicles of recent construction present a back swing-door equipped with hinges that let the door be opened beyond 180°, so that loading is guaranteed to be easy under any situations. However, said possibility to open the door beyond 180° entails a quite serious inconvenience. In fact, when the back swing-door is completely opened so that it rests against the body side of the vehicle, it lays in a position which it can interfere with the movement of the side sliding door. It is therefore possible that the swing-door and the sliding door bump the one against the other when the sliding door is pushed into a position of maximum opening.

This situation not only can cause damages to the vehicle but can also be dangerous for the driver who could be seriously hurt by a door of such a big size.

It is an object of the present invention to provide a device which can limit the stroke of the side sliding door when the back swing-door is opened beyond a predetermined angle.

This and other objects and advantages are achieved by the present invention which has as an object to provide a device intended to limit the stroke of a side sliding door of a work vehicle presenting the characteristics indicated in claim 1.

Further characteristics and advantages will become evident from the following description of one embodiment of the invention, set forth as non-restrictive example, with reference to the accompanying drawings, in which:
- figure 1 is a view of one body of a work vehicle where the back swing-door and the side door are in their maximum opening position;
- figure 2 is a schematic view of the device according to this invention which is applied both on the swing-door and on the body side of the vehicle where the sliding door is;
- figure 3 is a partly sectional perspective view of part of the device, according to the present invention, which is applied on the body side and connected to the guide of the sliding door;
- figures 4 and 5 are schematic illustrations of the way in which the device according to the present invention works, and
- figures 6-8 are schematic illustrations of the way in which the part of the device connected with the back door works.
- figure 9 is a schematic view of a second embodiment of the device portion according to the invention which is fitted on the back swing-door of the vehicle.

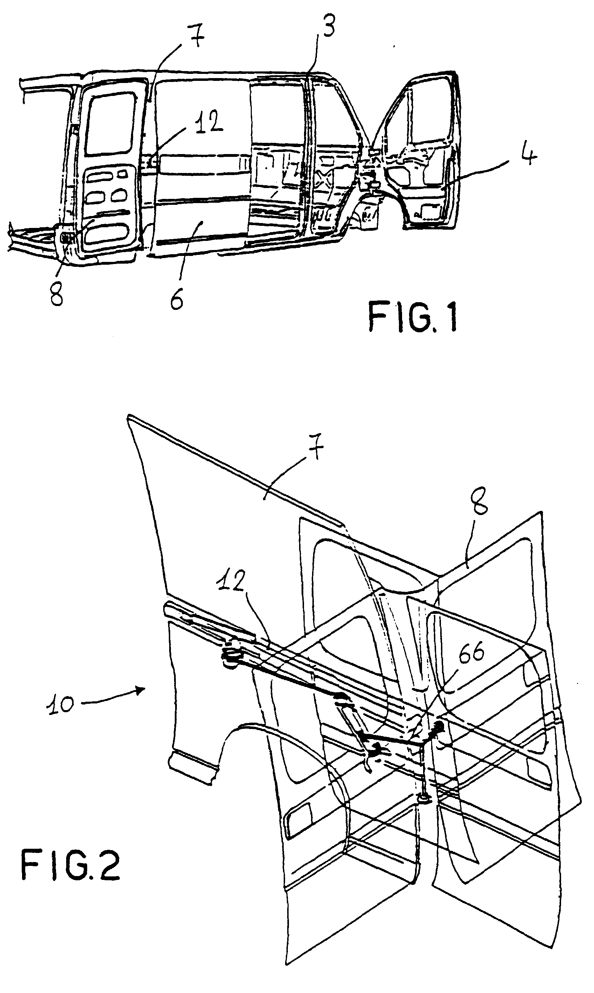

With reference to the figures, and in particular to figures 1 and 2, it is possible to see the body 3 of a work vehicle (van) equipped with a front door 4 on the right side, one sliding door 6 on the body side 7, and one back swing-door 8 which can be opened beyond an angle of 180°.

From figure 1 it becomes quite evident that when the back swing-door 8 lays against the side body 7, it is not possible to open the sliding door 6 completely without making it hit the back swing-door. In order to limit the stroke of the sliding door, the present invention suggests a stopping device indicated by reference number 10, to be assembled in the inner part of the side body 7, partly in the guide 12 of the sliding door 6. This device is controlled by a control rod 14 (fig.2) articulated on the inside edge of the swing-door 8 connected to the body side 7 by means of hinges (not shown).

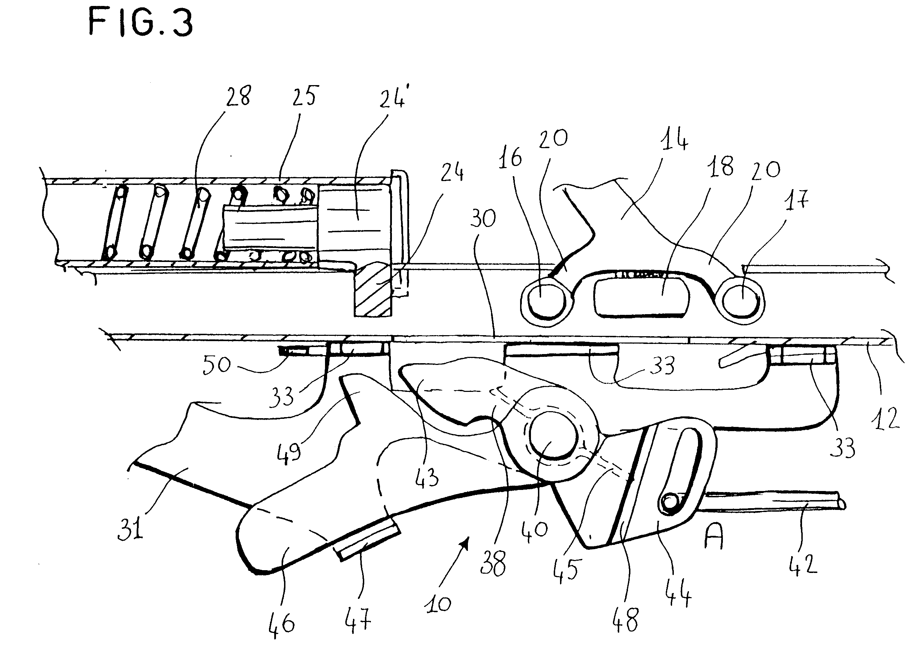

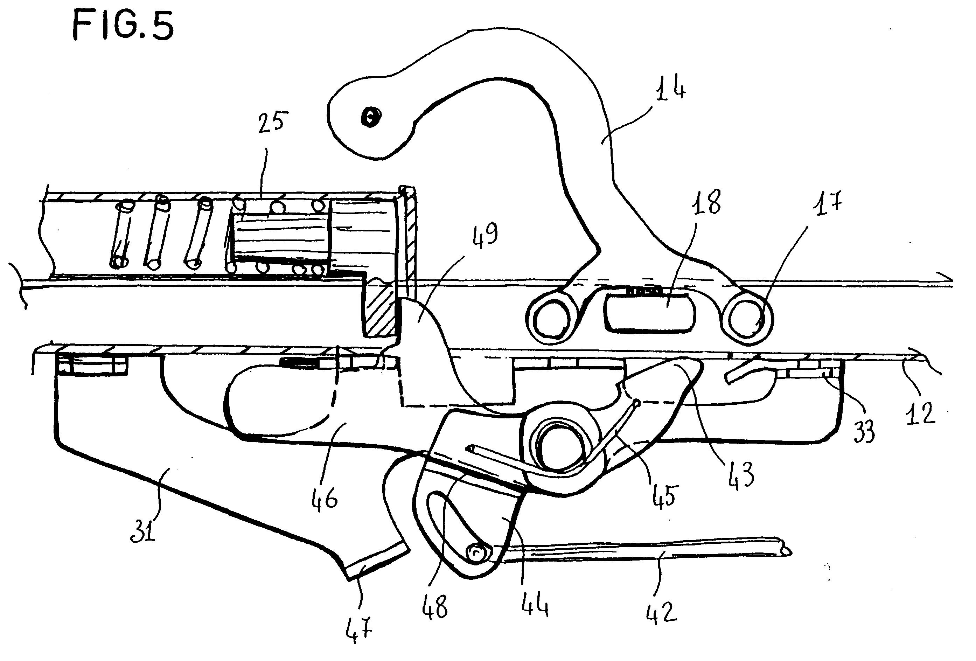

With special reference to figure 3 to 5, it will now be described the stop device 10 which, due to the significant mass of the door, must be provided with an energy absorption system, in order to avoid damages in case the door is violently opened (too fast), especially when the van is parked on a non-horizontal area., The device, as stated before, is fitted on the guide 12 of the small support arm 14 of the sliding door 6, which is engaged into said guide by means of two guide rollers 16 and 17 and one support wheel 18. Said rollers are fitted at the ends 20 of the small arm 14 which is U-shaped. Their axis are at right angles to the sliding plane of said small arm, while the axis of the support wheel 18 lays on said plane.

They all slide inside the guide 12 expressly shaped to house them, so that they can stand both the vertical and the horizontal thrusts that the door gives to the small arm 14. For this reason, the guide consists of a wide portion 22 where the rollers 16 and 17 rotate and of a narrow portion where the wheel 18 runs. One tooth 24 of a small cylinder 24', made of steel or of equivalent material, is longitudinally sliding into a cylinder 25 fixed by welding, or similar procedure, to the inside part of the side door, above the point where the end 20 of the small arm lays. The sliding of the small cylinder 24' provided with one tooth 24, inside cylinder 25, is controlled by a spring 28 calibrated in order to absorb the maximum thrust of the door while it slides at being opened. In one point corresponding to an opening of 60-70% approximately of the side door 6, the front wall of the guide 12 presents a substantially rectangular opening 30.

In correspondence with this opening 30, a bracket 31 is fixed on the guide 12, by means of screwing or other similar procedure, said bracket being provided with folded parts 33 parallel to the guide wall and fixed to it in the known way, so that the bracket 31 remains in a plane which is perpendicular to the guide 12.

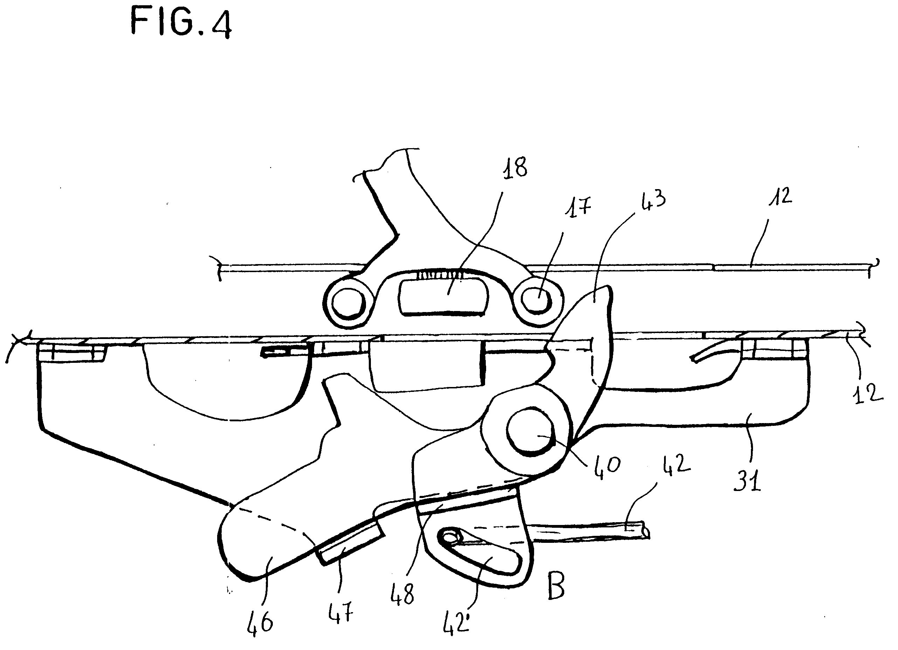

A first lever 38, rotatably located on the bracket 31, is adapted to rotate between two final positions A and B, visible in figure 3 and in figure 4 respectively, on an axis 40 fixed on the bracket 31 perpendicularly to it. When put into rotation (figure 4), the lever 38 is adapted, by means of a tension rod 42 hooked to a slot 42' made on one projecting part 44 of it, to make a finger 43 project inside the guide 12 against the action of a spring 45 (figure 4). Said finger 43 interferes with the passage of the rollers 16 and 17 (especially with roller 17) inside the guide 12.

A second lever 46 is resting on a fulcrum on pivot 40, being assembled separately from the first lever and being located far from guide 12. It is kept in its position against a detent 47, which is located on the bracket 31, by means of the action of a spring (not shown). The second lever 46 is movable towards the guide 12 under the thrust of a projecting part 48 located on the first lever 38. Said second lever 46 presents a second tooth 49 which (according to the position of the lever) can stick out inside the guide 12 when it is rotated against a detent 50 located on the bracket 31. The tooth sticks out so that it is engaged to the tooth 24 of the small cylinder 24' slidingly attached to the door.

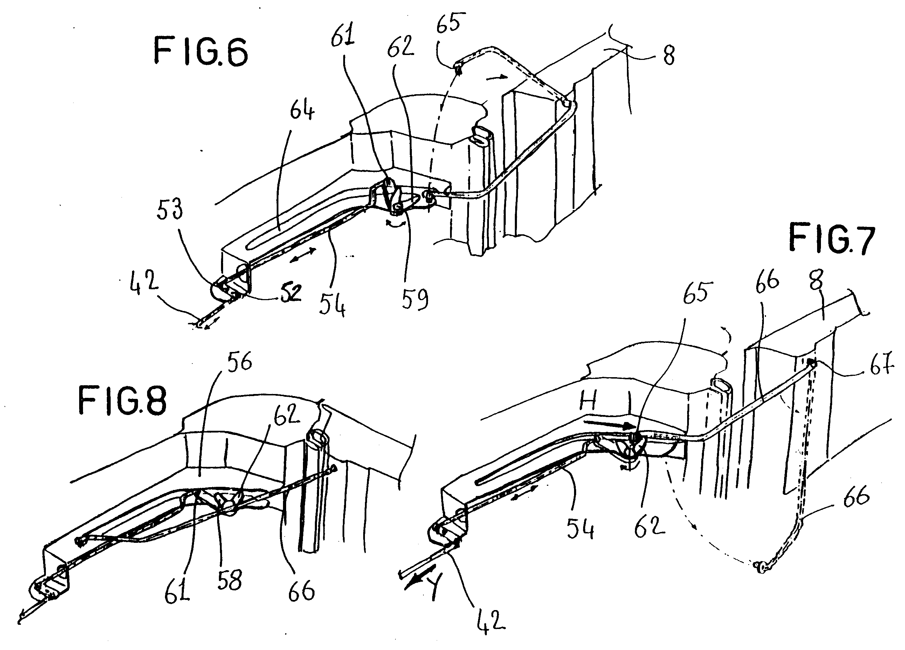

The system to move the first lever 38 is now described with special reference to figures 6 to 8.

The tension rod 42 is connected, at the end opposite to the one used for the connection to the cam, to a lever 52 supported and centrally resting on a fulcrum in 53 on the guide 12. The other end of the lever 52 is connected to a second tension rod 54 passing under a second guide 56 fixed internally to the final part of the side body of the van. The tension rod 54 is connected to the end of a second V-shaped lever 58 pivoted in 59 on the tip of the V of the second guide 56. The lever 58 is positioned in a way that, under any operation circumstances, one of its two branches 61 and 62 is transverse to the initial part of a groove 64 made in the second guide 56 and open outwards at the end of said guide directed towards the back swing-door 8. The length of the guide 56 is such that the end 65 of a rod 66 connected to the swing-door 8 through its other end 67 can follow, along the groove 64, the whole stroke of the door which, from an angle of 180° approximately swings until it becomes completely shut. To this purpose, the rod 66 is curved and its end 67 is movably connected to the swing-door 8 so that the other end 65 can be engaged and disengaged with the groove 64 (figures 6 and 7).

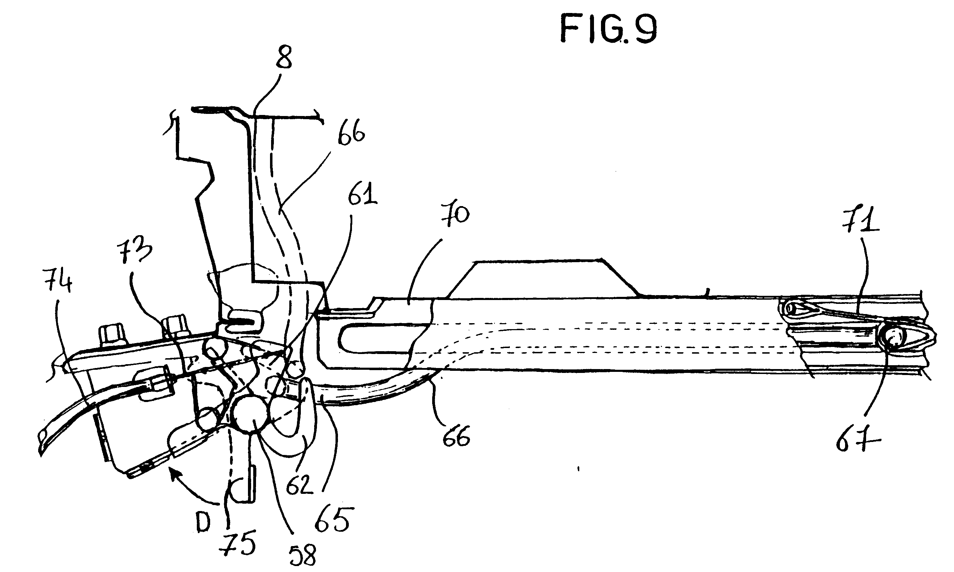

In the embodiment of figure 9 (same reference numbers indicate same parts), the rod 66 is housed in a box guide 70, fixed on the swing-door 8 in horizontal position. The end 67 of the rod, is connected to the guide by means of an elastic element 71, in this case a rubber elastic, to keep it inside the guide. The other end 65 of the rod, sticks out from the guide 70 and remains positioned at the level of the arm 61 of the lever 58 when the sliding door is opened by 90 degrees. In this embodiment, the arm 61 is connected to the lever 52, by means of a cable 73 of the push-pull type and its respective sheath 74. The lever 58 is further provided with a control arm 75 which allows to rotate it on its axis, when it becomes necessary to disengage the arm 62, the end 65 of which is more curved than the one of the previous embodiment.

The way the device works will now be described with reference to the appended figures.

When the van is being normally used with both the swing back door and the side door completely closed, the rod 66 remains in the position illustrated in figure 8, that is with its end 65 inserted at the bottom of groove 64, while the lever 38 is in the position A (fig.3) with the finger 43 out of guide 12. The second lever 46 is in its rest position against the detent 47.

When the back swing-door is opened by an angle not wider than 180°(approximately), the rod 66 slides with its end 65 in the guide 56, but stops before interfering with one arm 62 (see fig.7) of the V-shaped lever 58. If the door is opened beyond 180°, the end 65 of the rod 66, being dragged by the swing-door 8, acts against the arm 62 of the V-shaped lever 58, moving it in the direction of arrow H. This movement makes the tension rod 54 move in one direction and the tension rod 42 in the opposite direction (arrow Y, figure 7). The lever 38 is thus moved into position B (figure 4). With the lever 38 in this position, the finger 43 sticks out into the guide 12 thus interfering with the rollers 16 and 17 when the sliding side door is opened.

The passage of the rollers 16 and 17 on the finger 43, causes an additional rotation of the lever 38 by an angle the width of which corresponds to the length of the slot 42'. This additional rotation, makes the projecting part 48 push the lever 46 against the detent 50 with the tooth 49 sticking out into the guide 12.

The additional opening of the sliding door 6, will move the tooth 24, connected to it, against the tooth 49 of the lever 46. The thrust of the side door will be so absorbed, through the small cylinder 24', by the spring 28 which will gradually stop it stroke.In this way the stroke of the sliding side door is stopped at a predetermined intermediate stop point, before the end of the stroke itself, and the sliding door is prevented from hitting the back swing-door thus causing damages to things and/or people.To eliminate the intermediate stop point and allow a complete stroke of the sliding door, it will be enough to insert again the end 65 of the rod 66 into the guide 56 while the back swing-door 8 is being closed. The movement of the closing swing-door will move the rod along the guide so that it will press against the arm 61 of the lever 58 which is now in the position illustrated in figure 6. The movement of the lever due to the passage of the rod will make the tension rod 54 and 42 be subjected to a traction the direction of which is opposite to that previously described, so that the lever will move to position A, as in figure 3. As it was said before, when the first lever is in this position, the small arm 14 and the side door 6 are free to complete their stroke.

As to the operation of the embodiment of the device shown in figure 9, the following is to be noted. The back swing-door 8 can be opened freely, due to the elastic engagement of the rod 66, up to a maximum of 180° approximately, with no disengagement of the end 65 from the lever 58. Beyond this opening angle, it becomes necessary to disengage the end 65, by acting on the control arm 75 in the direction of the arrow D, thus making the rod 66 enter again into the guide 70. In this way it is possible to make the cable 73 act on the lever 38 (through the lever 52) making it pass to the B position thus producing the results mentioned before. At closing the back door, the end 65, due to its shape as well as to the shape of the arm 62, will be automatically inserted into the arm 62 and will push on the arm 61 thus causing its rotation and the consequent push on the cable 73. This one, again through the lever 52, will take the lever 38 into the A position, making thus the released sliding door free to complete its stroke.

## Claims

1. System to stop the side sliding door (6) of a work vehicle provided with a back swing-door (8) collapsible on the body side where said side door is, said side door being slidingly supported in a slide (12) made in the body side, by means of small arms (14) provided with guiding rollers (16, 17) and supporting wheels (18), between a position of maximum opening and a closing position; said stop system including a combination of:
a)means to absorb energy (24', 28) arranged on the side door (6) in order to restrain the opening stroke of said side door;
b)means (24, 38, 46, 49) to stop the opening stroke of the door at an intermediate position between the open and the close position, adapted to act on said absorption means; and
c)means (42, 54, 58, 66) to control the means to absorb the energy and means to stop the stroke, according to the position of the back swing-door.

2. System as claimed in claim 1 characterised in that said means to absorb the energy consist of one small metal cylinder (24') which can translate inside a hollow cylinder (25) and is adapted to be moved by said stop means (24, 38, 46, 49) against the action of an elastic element (28) coaxial to said cylinder (25).

3. System as claimed in claim 1 characterised in that the stop means consist also of one tooth (24) integral to said small cylinder (24') and adapted to work together with a second tooth (49) located on a second lever (46), which rests on a fulcrum (40) on a bracket (31) connected to the guide (12); said second lever being adapted to rotate from a first position, where said second tooth (49) stays outside the guide, to a second position where it sticks out into said guide (12).

4. System as claimed in claim 3 characterised in that said second lever (46) is coupled with a first lever (38) located on the same fulcrum (40) and provided with one finger (43); said first lever being adapted to rotate from a first position (A), in which the finger (43) does not stick out in the guide (12), to a second position (B) in which it sticks out in said guide and can be further rotated by means of said guide rollers (16, 17).

5. System as claimed in claim 1 to 4 characterised in that said first lever presents a projecting part (48) adapted to be engaged with the second lever (46) to rotate it from the first to the second position as a consequence of the further rotation given by said rollers (16, 17) through the finger (43).

6. System as claimed in claim 4 characterised in that said first lever is subjected to control means consisting of a chain of rods and levers (42, 54, 58, 66) which can be connected to the back swing-door (8) and is adapted to move said lever (38) from the position in which the finger (43) is passive (A) to the position in which it can be activated (B) when said swing-door goes beyond a predetermined opening threshold.

7. System as claimed in claim 6 characterised in that one of the levers (58) of said chain of rods and levers is V-shaped, is resting on a fulcrum on the tip of the V and is adapted to be moved in two positions angularly spaced by the end of one rod of said chain of rods and levers, connected to the back swing-door.

8. System as claimed in claim 7 characterised in that said chain of rods and levers connects one end of said V-shaped lever (58) to said cam (38) so that a rotation in one direction of said end corresponds to a rotation in the opposite direction of the cam.

9. System as claimed in claim 7 characterised in that said V-shaped lever (58) is supported by one guide (64) where the free end (65) of a rod (66) connected to said back swing-door (8) can be engaged.

10. System as claimed in claim 6 characterised in that said V-shaped lever (58) is connected to said lever (38) by means consisting of a chain of rod, lever and cable.

11. System as claimed in claim 9 characterised in that said rod (66) is connected to said back swing-door by means of a guide (70) in which is elastically kept.
